(19) Europäisches Patentamt
European Patent Office
Office européen des brevets

(11) EP 4 672 363 A1

(12) EUROPEAN PATENT APPLICATION
published in accordance with Art. 153(4) EPC

(43) Date of publication:
31.12.2025  Bulletin 2026/01

(51) International Patent Classification (IPC):
H01M 4/36 (2006.01)

(21) Application number: 23933635.7

(52) Cooperative Patent Classification (CPC):
Y02E 60/10

(22) Date of filing: 04.07.2023

(86) International application number:
PCT/CN2023/105753

(87) International publication number:
WO 2024/216762 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.04.2023  PCT/CN2023/089498

(71) Applicant: Contemporary Amperex Technology
Co., Limited
Ningde, Fujian 352100 (CN)

(72) Inventors:
• ZHAO, Yuzhen
Ningde, Fujian 352100 (CN)
• GUAN, Yingjie
Ningde, Fujian 352100 (CN)
• QIN, Meng
Ningde, Fujian 352100 (CN)
• WEN, Yan
Ningde, Fujian 352100 (CN)
• HUANG, Qisen
Ningde, Fujian 352100 (CN)

(74) Representative: Jacob, Reuben Ellis et al
Maucher Jenkins
Seventh Floor Offices
Artillery House
11-19 Artillery Row
London SW1P 1RT (GB)

(54) **POSITIVE ELECTRODE ACTIVE MATERIAL AND PREPARATION METHOD THEREFOR, POSITIVE ELECTRODE SHEET, BATTERY AND ELECTRICAL APPARATUS**

(57)    The present application discloses a positive electrode active material and a preparation method therefor, a positive electrode sheet, a battery and an electrical apparatus. The positive electrode active material comprises: $Na_{4-x}K_yFe_{3-p}M_q(PO_4)_2P_2O_7$, wherein M comprises at least one of Ni, Co, Mn, V, Ti, Mo, Nb, W, Cr, Zn, Zr, Ca, Mg, Cu, Sr, Y or Al, $0 < x \leq 0.4$, $0 < y \leq 0.4$, $0 < p \leq 0.3$, and $0 < q \leq 0.3$.

FIG. 1

# EP 4 672 363 A1

## Description

### TECHNICAL FIELD

The present application relates to the technical field of batteries, and in particular, to a positive electrode active material and a preparation method therefor, a positive electrode plate, a battery, and an electrical apparatus.

### BACKGROUND

The growing shortage of lithium resources, the rising prices of upstream materials, the lagging development of recycling technology, and the low recycling rate of old batteries pose significant challenges for lithium-ion batteries. Sodium batteries utilize the deintercalation of sodium ions between positive and negative electrodes to achieve charging and discharging. Additionally, sodium resources are far more abundant, widely distributed, and significantly cheaper than lithium. Therefore, sodium-ion batteries have emerged as a highly promising next-generation electrochemical system with the potential to replace lithium-ion batteries. However, existing sodium batteries suffer from low energy density and low rate performance.

### SUMMARY OF THE INVENTION

In view of the technical problems existing in the Background, the present application provides a positive electrode material, aiming to improve the energy density and rate performance of a sodium battery that contains the positive electrode active material.

In order to achieve the above objective, in one aspect, the present application provides a positive electrode active material, which includes $Na_{4-x}K_yFe_{3-p}M_q(PO_4)_2P_2O_7$, where M includes at least one of Ni, Co, Mn, V, Ti, Mo, Nb, W, Cr, Zn, Zr, Ca, Mg, Cu, Sr, Y or Al, with $0 < x \leq 0.4$, $0 < y \leq 0.4$, $0 < p \leq 0.3$, and $0 < q \leq 0.3$.

Compared with the prior art, the present application includes at least the following beneficial effects: according to the present application, a Na-site and a Fe-site of the positive electrode active material are doped with element K and metal element M respectively, i.e., dual-site doping is performed in the positive electrode active material, so that the ionic conductivity and electronic conductivity of the positive electrode active material can be increased, thereby improving the energy density and rate performance of the battery.

In some embodiments of the present application, in the positive electrode active material, values of x, y, p and q satisfy at least one of the following conditions: $0.1 \leq x \leq 0.2$; $0.05 \leq y \leq 0.15$; $0.05 \leq p \leq 0.2$; $0.05 \leq q \leq 0.15$; and $p \geq q$. Therefore, both the energy density and rate performance of the battery can be improved.

In some embodiments of the present application, in the positive electrode active material, $4-x+y \leq 4$. Therefore, the ionic conductivity of the positive electrode material can be improved, thereby making good use of battery capacity and improving the energy density and rate performance of the material.

In some embodiments of the present application, in the positive electrode active material, $3-p+q < 3$. Therefore, the phase purity of the positive electrode active material can be improved, thereby increasing the gram capacity of the material and improving the energy density of the battery.

In some embodiments of the present application, in the positive electrode active material, $0.02 \leq y/q \leq 80$, preferably $0.1 \leq y/q \leq 40$, and more preferably $0.2 \leq y/q \leq 10$. Therefore, the ionic conductivity and electronic conductivity of the positive electrode active material can be improved, and the phase purity can be improved, thereby improving the energy density and rate performance of the battery can be improved.

In some embodiments of the present application, in the positive electrode active material, M includes at least one of Ni, Co, Mn, V, Ca, Mg, Cu, Sr, Y, or Al. Therefore, the phase purity and conductivity of the positive electrode active material can be improved, thereby improving the energy density and rate performance of the battery.

In some embodiments of the present application, the positive electrode active material further includes carbon. Therefore, the phase purity and conductivity of the positive electrode active material can be improved, thereby improving the energy density and rate performance of the battery.

In some embodiments of the present application, the carbon content accounts for 0.5%-6%, preferably 1%-3.6%, based on the total mass of the positive electrode active material. Therefore, the phase purity and conductivity of the positive electrode active material can be improved, thereby improving the energy density and rate performance of the battery.

In some embodiments of the present application, the positive electrode active material satisfies at least one of the following conditions: a volume average particle size Dv50 of the positive electrode active material is 0.9 $\mu$m to 8 $\mu$m, optionally 1.2 $\mu$m to 3.5 $\mu$m; and a BET specific surface area of the positive electrode active material is 4 $m^2/g$ to 13 $m^2/g$, optionally 5.5 $m^2/g$ to 10 $m^2/g$.

A second aspect of the present application provides a method for preparing the above-mentioned positive electrode active material, and the method includes:

mixing a sodium source, a potassium source, an iron source, a phosphorus source, and an M source to obtain a precursor material; and
sintering the precursor material to obtain the positive electrode active material.

Therefore, the method can be used to prepare the above-mentioned positive electrode active material with excellent ionic conductivity and electronic conductivity, thereby improving the energy density and rate performance of the battery.

In some embodiments of the present application, the sintering temperature is 200°C to 600°C, and the holding time is 11h to 16h.

In some embodiments of the present application, the sodium source, potassium source, iron source, phosphorus source and M source are mixed with a first carbon source. Therefore, the phase purity and conductivity of the positive electrode active material can be improved, thereby improving the energy density and rate performance of the battery.

In some embodiments of the present application, the method for preparing the positive electrode active material further includes mixing the positive electrode active material with a second carbon source and then sintering to form a carbon coating on the surface of the positive electrode active material. Therefore, the conductivity of the positive electrode active material can be improved, and thus the energy density and rate performance of the battery can be improved.

In some embodiments of the present application, the temperature for sintering a mixture of the positive electrode active material and the second carbon source is 500°C to 600°C, and the holding time is 3 h to 5 h.

A third aspect of the present application provides a positive electrode plate including the above-mentioned positive electrode active material or a positive electrode active material prepared by the above-mentioned method. Therefore, the positive electrode plate has excellent ionic conductivity and electronic conductivity, thereby improving the energy density and rate performance of the battery.

A fourth aspect of the present application provides a battery, including the above-mentioned positive electrode plate. Therefore, the battery has excellent energy density and rate performance.

A fifth aspect of the present application provides an electrical apparatus including the above-mentioned battery.

Additional aspects and advantages of the present application will be set forth in part in the description which follows, and in part will be obvious from the description which follows, or may be learned by practice of the present application.

## DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:

FIG. 1 is a schematic structural diagram of a battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded view of FIG. 3; and
FIG. 5 is a schematic diagram of an embodiment of an electrical apparatus using a battery as a power source.

Reference numerals:
1-secondary battery; 2-battery module; 3-battery pack; 4-upper box; 5-lower box

## DETAILED DESCRIPTION

The embodiments of the technical solution of the present application will be described in detail below. The following embodiments are only used to more clearly illustrate the technical solutions of the present application, therefore only as examples, and cannot be used to limit the scope of protection of the present application.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

For conciseness, only certain numerical ranges are explicitly disclosed herein. However, any lower limit can be combined with any upper limit to form a range that is not explicitly recited; any lower limit can be combined with another lower limit to form a range that is not explicitly recited; and any upper limit may be combined with another upper limit to form a range that is not explicitly recited. Additionally, each individually disclosed point or single numerical value may itself serve as a lower or upper limit to form a range not explicitly recited by combining with any other point or single numerical value, or with other lower or upper limits.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

With the technical development and increasing demand of electric vehicles and rechargeable mobile devices, the research work related to secondary batteries, as a representative of the new energy field, is also developing rapidly. Compared with traditional lithium-ion batteries, sodium-ion batteries have a strong price advantage and have broad application prospects in large-scale power storage systems.

A Fe-based polyanionic phosphate positive electrode material $Na_4Fe_3(PO_4)_2P_2O_7$ has become one of the popular positive electrode active materials for sodium-ion batteries because of its abundant resources, environmental friendliness, ease of large-scale production, open sodium-ion diffusion channels, and good thermal stability and cycle stability.

However, the material still has the following problems: on the one hand, the material itself has poor conductivity, which causes it to show strong polarization when used in batteries, thus reducing the capacity performance of the battery and worsening the rate performance of the battery; on the other hand, a small amount of impurities that exist in the material during the synthesis process are difficult to remove, resulting in the gram capacity of the material failing to reach the expected level, thus affecting the energy density of the battery.

Thus, in one aspect, the present application provides a positive electrode active material, which includes $Na_{4-x}K_yFe_{3-p}M_q(PO_4)_2P_2O_7$, where M includes at least one of Ni, Co, Mn, V, Ti, Mo, Nb, W, Cr, Zn, Zr, Ca, Mg, Cu, Sr, Y or Al, with $0 < x \leq 0.4$, $0 < y \leq 0.4$, $0 < p \leq 0.3$, and $0 < q \leq 0.3$.

It should be noted that ratios of elements in the positive electrode active material in the present application refer to ratios of elements in the positive electrode active material before the positive electrode active material is made into a positive electrode plate and then assembled into a battery for formation. It can be understood by those skilled in the art that in the positive electrode plate, the battery, and an electrical apparatus, some elements will be consumed due to processes such as formation and cycling, and thus even if the ratios of the corresponding elements of the positive electrode active material are measured to be out of the above mentioned ranges, they should still fall within the scope of the present application. For example, batteries commonly found in the market are typically subjected to cycling aging after assembly. As a result, in the positive electrode active material, value of x may be greater than 0.4, and/or value of p may be greater than 0.3, and/or an atomic ratio between element P and element O may not be an integer ratio.

Without being limited to any particular theory, the present application achieves dual-site doping of sodium and iron sites in the material lattice by doping the Na-site and the Fe-site of the positive electrode active material with element K ($0 < y \leq 0.4$) and a metal element M ($0 < q \leq 0.3$) respectively. Since the radius of K-ions is greater than that of Na-ions, after the K-ions with the above content are doped at the Na-site, the lattice structure will undergo slight deformation, thus expanding a sodium-ion transport channel and facilitating rapid sodium-ion deintercalation. Moreover, after the K-ions with the above content are doped at the Na-site, the Na-ion migration barrier can be reduced, thereby increasing the ionic conductivity and improving the rate performance of the battery. After the metal element M with the above content is doped at the Fe-site, the formation of impurity phases such as ferric sodium pyrophosphate and sodium iron phosphate can be inhibited, then the formation of polyanionic phosphate products can be promoted, thereby improving the phase purity of the positive electrode material, improving the gram capacity of the material, and increasing the energy density of the material. In addition, the metal element M doped at the Fe-site improves the ionic conductivity and electronic conductivity of the material, reduces electron transport impedance in the battery, lowers battery polarization, enhances sodium-ion deintercalation reversibility, and thus improves the rate performance of the battery. Therefore, according to the present application, the dual-site doping is performed in the positive electrode active material, which can improve the ionic conductivity and electronic conductivity of the positive electrode active material, thereby improving the energy density and rate performance of the battery.

In some embodiments, in the above-mentioned positive electrode active material $Na_{4-x}K_yFe_{3-p}M_q(PO_4)_2P_2O_7$, M includes at least one of Ni, Co, Mn, V, Ti, Mo, Nb, W, Cr, Zn, Zr, Ca, Mg, Cu, Sr, Y or Al. Therefore, the metal element M in the composition can not only reduce the impurity phases in the positive electrode active material, but also improve the conductivity of the positive electrode active material, thereby improving the energy density and rate performance of the battery. In some other embodiments of the present application, in the above-mentioned positive electrode active material, M includes at least one of Ni, Co, Mn, V, Ca, Mg, Cu, Sr, Y, or Al.

In some embodiments, in the above-mentioned compound $Na_{4-x}K_yFe_{3-p}M_q(PO_4)_2P_2O_7$, x may be $0<x\leq0.4$, for example, 0.01-0.4, 0.03-0.38, 0.05-0.35, 0.1-0.32, 0.12-0.3, 0.15-0.28, 0.18-0.25, and 0.2-0.22. In some other embodiments, $0.1\leq p\leq0.2$. The positive electrode active material includes sodium ions with this content, and thus the battery has high capacity.

In some embodiments, in the above-mentioned compound $Na_{4-x}K_yFe_{3-p}M_q(PO_4)_2P_2O_7$, y may be $0<y\leq0.4$, for example, 0.01-0.4, 0.03-0.38, 0.05-0.35, 0.1-0.32, 0.12-0.3, 0.15-0.28, 0.18-0.25, and 0.2-0.22. In some other embodiments, $0.05\leq y\leq0.15$. K-ions with this content are doped at the Na-site of the positive electrode active material. Since the radius of K-ions is greater than that of sodium-ions, after the K-ions with this content are doped at the Na-site, the lattice structure will undergo slight deformation, thus expanding a sodium-ion transport channel and facilitating rapid sodium-ion deintercalation. Moreover, after the K-ions with the above content are doped at the Na-site, the Na-ion migration barrier can be reduced, thereby increasing the ionic conductivity and improving the rate performance of the battery.

In some embodiments, in the above-mentioned positive electrode active material $Na_{4-x}K_yFe_{3-p}M_q(PO_4)_2P_2O_7$, x and y satisfy $4-x+y\leq4$, for example, $3.8\leq4-x+y\leq4$, $3.85\leq4-x+y\leq3.95$, and $3.9\leq4-x+y\leq3.95$. Therefore, Na-ions and K-ions in the positive electrode active material act synergistically to improve the capacity and rate performance of the battery.

In some embodiments, in the above-mentioned compound $Na_{4-x}K_yFe_{3-p}M_q(PO_4)_2P_2O_7$, p may be $0<p\leq0.3$, for example, 0.01-0.3, 0.03-0.28, 0.05-0.25, 0.1-0.22, 0.12-0.2, and 0.15-0.18. In some other embodiments, $0.05\leq p\leq0.2$. Therefore, the positive electrode active material contains element Fe with this content, which can improve the thermal stability of the positive electrode material.

In some embodiments, in the above-mentioned compound $Na_{4-x}K_yFe_{3-p}M_q(PO_4)_2P_2O_7$, q may be $0<q\leq0.3$, for example, 0.01-0.3, 0.03-0.28, 0.05-0.25, 0.1-0.22, 0.12-0.2, and 0.15-0.18. In some other embodiments, $0.05\leq q\leq0.15$. Since the metal element M with the above content is doped at the Fe-site in the positive electrode active material, the formation of impurity phases such as ferric sodium pyrophosphate and sodium iron phosphate can be inhibited, then the formation of polyanionic phosphate products can be promoted, thereby improving the phase purity of the positive electrode material, improving the gram capacity of the material, and increasing the energy density of the material. In addition, the metal element M with this content doped at the Fe-site also improves the ionic conductivity and electronic conductivity of the material, reduces electron transport impedance in the battery, lowers battery polarization, enhances sodium-ion deintercalation reversibility, and thus improves the rate performance of the battery.

In some embodiments, in the above-mentioned positive electrode active material $Na_{4-x}K_yFe_{3-p}M_q(PO_4)_2P_2O_7$, p and q satisfy $p\geq q$, i.e., $3-p+q\leq3$, for example, $2.8<3-p+q\leq3$, $2.85\leq3-p+q\leq2.95$, $2.9\leq3-p+q\leq2.95$. In some other embodiments, $3-p+q<3$. Therefore, the element Fe and the element M in the positive electrode active material act synergistically to improve the rate performance and energy density of the battery.

In some embodiments, in the above-mentioned positive electrode active material $Na_{4-x}K_yFe_{3-p}M_q(PO_4)_2P_2O_7$, $0.02\leq y/q\leq80$, for example, y/q may be 0.1-80, 0.5-80, 1-78, 5-75, 10-70, 20-60, 30-50, and 30-40. In some other embodiments, in the above-mentioned positive electrode active material $Na_{4-x}K_yFe_{3-p}M_q(PO_4)_2P_2O_7$, $0.1\leq y/q\leq40$ and $0.2\leq y/q\leq10$. Specifically, K-ion doping increases the impurity phase sodium iron phosphate in the positive electrode active material, while the metal element M can suppress the formation of the impurity phase in the positive electrode active material. According to the present application, a ratio of the K-ion doping amount to the metal element M doping amount is within the range specified above, and the K-ions and the metal element M act synergistically, so that the impurity phase sodium iron phosphate in the positive electrode active material can be reduced, the structural stability of the material can be improved, and the ionic conductivity and electronic conductivity of the positive electrode active material can be increased, thereby improving the energy density and rate performance of the battery.

In some embodiments, the above-mentioned positive electrode active material further includes carbon. For example, the carbon may be mixed inside the positive electrode active material and/or applied on at least part of the surface of the positive electrode active material particles. Specifically, the carbon mixed in the positive electrode active material can improve the phase purity of the material, reduce the content of the impurity phase in the material and increase the gram capacity of the material, and can further improve the conductivity of the positive electrode active material. The carbon applied on the surface of the positive electrode active material, i.e., the carbon coating formed on the surface of the positive electrode active material particles, can not only improve the conductivity of the material, but also reduce the contact area between the positive electrode active material and an electrolyte in the battery, reduce side reactions of the positive electrode active material, and facilitate the capacity performance of the material.

In some embodiments, based on the total mass of the positive electrode active material, the carbon content of the above-mentioned positive electrode active material accounts for 0.5%-6%, for example, 1%-6%, 1%-5.5%, 1%-4%, 1%-3.6%, 1.2%-3.4%, 1.4%-3.2%, 1.6%-3%, 1.8%-2.8%, 2%-2.6%, and 2.2%-2.4%. In some other embodiments, based on the total mass of the positive electrode active material, the carbon content of the above-mentioned positive electrode active material accounts for 1%-3.6%. Specifically, if carbon is mixed inside the positive electrode active material, the carbon content here is the content of carbon mixed inside the positive electrode active material; if carbon is applied on the surface of the positive electrode active material, the carbon content here is the content of carbon formed on the surface of the positive electrode active material; if carbon is both mixed inside the positive electrode active material and applied on the surface of the positive electrode active material, the carbon content here is the sum of the content of carbon mixed inside the positive electrode active material and the content of carbon applied on the surface of the positive electrode active material. The total mass of the positive electrode active material in the present application is within the above ratio range, which can improve the conductivity and gram capacity of the positive electrode active material.

In some embodiments, the positive electrode active material includes at least one of $Na_{3.95}K_{0.05}Fe_{2.9}V_{0.1}(PO_4)_2P_2O_7$, $Na_{3.95}K_{0.05}Fe_{2.9}Ti_{0.1}(PO_4)_2P_2O_7$, $Na_{3.9}K_{0.1}Fe_{2.94}Mo_{0.02}(PO_4)_2P_2O_7$, $Na_{3.9}K_{0.1}Fe_{2.95}Nb_{0.02}(PO_4)_2P_2O_7$, $Na_{3.9}K_{0.1}Fe_{2.94}W_{0.02}(PO_4)_2P_2O_7$, $Na_{3.95}K_{0.05}Fe_{2.9}Cr_{0.02}(PO_4)_2P_2O_7$, $Na_{3.9}K_{0.1}Fe_{2.99}Zn_{0.01}(PO_4)_2P_2O_7$, $Na_{3.9}K_{0.1}Fe_{2.9}Zr_{0.1}(PO_4)_2P_2O_7$, $Na_{3.98}K_{0.01}Fe_{2.85}Mg_{0.05}(PO_4)_2P_2O_7$, $Na_{3.94}K_{0.02}Fe_{2.85}Mg_{0.05}(PO_4)_2P_2O_7$, $Na_{3.9}K_{0.1}Fe_{2.85}Mg_{0.05}(PO_4)_2P_2O_7$, $Na_{3.85}K_{0.1}Fe_{2.85}Mg_{0.05}(PO_4)_2P_2O_7$, $Na_{3.8}K_{0.1}Fe_{2.85}Mg_{0.05}(PO_4)_2P_2O_7$, $Na_{3.7}K_{0.1}Fe_{2.85}Mg_{0.05}(PO_4)_2P_2O_7$, $Na_{3.6}K_{0.1}Fe_{2.85}Mg_{0.05}(PO_4)_2P_2O_7$, $Na_{3.85}K_{0.15}Fe_{2.85}Mg_{0.05}(PO_4)_2P_2O_7$, $Na_{3.6}K_{0.3}Fe_{2.85}Mg_{0.05}(PO_4)_2P_2O_7$, $Na_{3.7}K_{0.25}Fe_{2.85}M_{0.05}(PO_4)_2P_2O_7$, $Na_{3.6}K_{0.4}Fe_{2.85}Mg_{0.05}(PO_4)_2P_2O_7$, $Na_{3.85}K_{0.05}Fe_{2.85}Mg_{0.05}(PO_4)_2P_2O_7$, $Na_{3.6}K_{0.4}Fe_{2.85}Mg_{0.005}(PO_4)_2P_2O_7$, $Na_{3.6}K_{0.4}Fe_{2.85}Mg_{0.006}(PO_4)_2P_2O_7$, $Na_{3.6}K_{0.4}Fe_{2.85}Mg_{0.01}(PO_4)_2P_2O_7$, $Na_{3.6}K_{0.4}Fe_{2.85}Mg_{0.02}(PO_4)_2P_2O_7$, $Na_{3.85}K_{0.05}Fe_{2.7}Mg_{0.25}(PO_4)_2P_2O_7$, $Na_{3.85}K_{0.004}Fe_{2.75}Mg_{0.2}(PO_4)_2P_2O_7$, $Na_{3.95}K_{0.05}Fe_{2.95}Ni_{0.03}(PO_4)_2P_2O_7$, $Na_{3.95}K_{0.05}Fe_{2.9}Co_{0.05}(PO_4)_2P_2O_7$, $Na_{3.95}K_{0.05}Fe_{2.8}Ca_{0.1}(PO_4)_2P_2O_7$, $Na_{3.85}K_{0.1}Fe_{2.98}Mg_{0.1}(PO_4)_2P_2O_7$, $Na_{3.85}K_{0.1}Fe_{2.95}Mg_{0.02}(PO_4)_2P_2O_7$, $Na_{3.85}K_{0.1}Fe_{2.9}Mg_{0.05}(PO_4)_2P_2O_7$, $Na_{3.85}K_{0.1}Fe_{2.85}Mg_{0.1}(PO_4)_2P_2O_7$, $Na_{3.85}K_{0.1}Fe_{2.85}Mg_{0.15}(PO_4)_2P_2O_7$, $Na_{3.85}K_{0.1}Fe_{2.8}Mg_{0.15}(PO_4)_2P_2O_7$, $Na_{3.85}K_{0.1}Fe_{2.7}Mg_{0.15}(PO_4)_2P_2O_7$, $Na_{3.85}K_{0.1}Fe_{2.7}Mg_{0.2}(PO_4)_2P_2O_7$, $Na_{3.85}K_{0.1}Fe_{2.7}Mg_{0.3}(PO_4)_2P_2O_7$, $Na_{3.85}K_{0.1}Fe_{2.95}Mn_{0.05}(PO_4)_2P_2O_7$, $Na_{3.85}K_{0.1}Fe_{2.9}Al_{0.01}(PO_4)_2P_2O_7$, $Na_{3.85}K_{0.1}Fe_{2.85}Mn_{0.05}Mg_{0.05}(PO_4)_2P_2O_7$, $Na_{3.85}K_{0.1}Fe_{2.85}Co_{0.04}Al_{0.02}(PO_4)_2P_2O_7$, $Na_{3.9}K_{0.1}Fe_{2.88}Cu_{0.1}(PO_4)_2P_2O_7$, $Na_{3.95}K_{0.05}Fe_{2.85}Sr_{0.1}(PO_4)_2P_2O_7$, $Na_{3.9}K_{0.1}Fe_{2.825}Y_{0.05}Y_{0.05}(PO_4)_2P_2O_7$, $Na_{3.9}K_{0.1}Fe_{2.88}Cu_{0.07}Mg_{0.03}(PO_4)_2P_2O_7$, $Na_{3.95}K_{0.05}Fe_{2.85}Sr_{0.05}Mg_{0.05}(PO_4)_2P_2O_7$, $Na_{3.9}K_{0.1}Fe_{2.87}Y_{0.02}Mg_{0.03}(PO_4)_2P_2O_7$.

In some embodiments, a volume average particle size Dv50 of the positive electrode active material is 0.9 $\mu$m to 8 $\mu$m, for example, 1 $\mu$m to 7.8 $\mu$m, 1.2 $\mu$m to 7.5 $\mu$m, 1.5 $\mu$m to 7.2 $\mu$m, 1.7 $\mu$m to 7 $\mu$m, 2 $\mu$m to 6.5 $\mu$m, 2.5 $\mu$m to 6 $\mu$m, 3 $\mu$m to 5.5 $\mu$m, 3.5 $\mu$m to 5 $\mu$m, and 4 $\mu$m to 4.5 $\mu$m. In some other embodiments, Dv50 of the positive electrode active material is 1.2 $\mu$m to 3.5 $\mu$m.

In the present application, Dv50 refers to a corresponding particle size when the cumulative volume distribution percentage reaches 50%. For example, it is determined by using a laser particle size analyzer (e.g. Malvern Master Size 3000) with reference to the standard GB/T 19077-2016.

In some embodiments, a specific surface area (BET) of the positive electrode active material is 4 $m^2$/g to 13 $m^2$/g, for example, 4.2 $m^2$/g to 12.8 $m^2$/g, 4.5 $m^2$/g to 12.5 $m^2$/g, 4.7 $m^2$/g to 12.2 $m^2$/g, 5 $m^2$/g to 12 $m^2$/g, 5.5 $m^2$/g to 11.5 $m^2$/g, 6 $m^2$/g to 11 $m^2$/g, 6.5 $m^2$/g to 10.5 $m^2$/g, 7 $m^2$/g to 10 $m^2$/g, 7.5 $m^2$/g to 9.5 $m^2$/g, and 8 $m^2$/g to 9 $m^2$/g. In some other embodiments, the specific surface area BET of the positive electrode active material is 5.5 $m^2$/g to 10 $m^2$/g.

In the present application, the specific surface area BET of the positive electrode active material can be obtained by the following testing method: preparing a multi-station type full-automatic specific surface area and pore analyzer GeminiVII2390 from U.S. Micromeritics, placing about 7 g of sample into a 9cc long tube with a bulb, degassing at the temperature of 200°C for 2 h, then placing the sample into a main machine to test to obtain BET (specific surface area) data of the positive electrode active material.

Therefore, the positive electrode plate of the present application has excellent ionic conductivity and electronic conductivity, which can improve the energy density and rate performance of the battery.

A second aspect of the present application provides a method for preparing the above-mentioned positive electrode active material, which includes the following steps.

S 100: Mixing a sodium source, a potassium source, an iron source, a phosphorus source, and an M source

In some embodiments, the sodium source, the potassium source, the iron source, the phosphorus source and the M source are mixed and added into water, stirred and ground to obtain a mixed slurry, and then the slurry is dried to obtain a precursor material.

It should be noted that the sodium source, the potassium source, the iron source, the phosphorus source and the M source are conventional materials in the field, and those skilled in the art may select them according to actual conditions. For example, the sodium source includes at least one of sodium pyrophosphate, sodium dihydrogen phosphate, disodium hydrogen phosphate, sodium carbonate, sodium acetate and sodium oxalate; the potassium source includes at least one of potassium pyrophosphate, potassium dihydrogen phosphate, dipotassium hydrogen phosphate, potassium phosphate, potassium metaphosphate, potassium citrate, potassium carbonate, potassium bicarbonate, potassium oxalate and potassium acetate; the iron source includes at least one of ferric nitrate, ferric chloride, ferric oxide, ferric phosphate and ferrous oxalate; the phosphorus source includes at least one of sodium pyrophosphate, sodium dihydrogen phosphate, ammonium phosphate, ferric phosphate, phosphoric acid and pyrophosphoric acid; and the M source includes at least one of the chloride, oxide, acetate and nitrate of element M.

In some embodiments, if it is necessary to mix carbon inside the positive electrode active material, the sodium source, potassium source, iron source, phosphorus source and M source are mixed with a first carbon source. It should be noted that the first carbon source includes at least one of sucrose, tannic acid, polyethylene glycol, polyvinyl pyrrolidone, glucose, ascorbic acid, conductive carbon black, carbon nanotubes, graphene and citric acid.

S200: Sintering the precursor powder

In some embodiments, the precursor material that is obtained above and contains the sodium source, potassium source, iron source, phosphorus source and M source is placed in a tube furnace for sintering. Specifically, a reducing agent may be added during the sintering process, for example, sintering is carried out in a mixed atmosphere of hydrogen and argon (a volume ratio of hydrogen to argon is (3-7):(93-97), for example, (3-7):(94-96), (3-7):95, (4-6):(93-97), and 5:(93-97)), and the sintering temperature in the sintering process may be 200°C to 600°C, and the holding time may be 11h to 16h. For example, multi-step sintering may be used, such as two-step sintering, where the temperature for the first step of sintering is 200°C to 300°C, for example, 220°C to 280°C and 240°C to 260°C, the holding time is 3h to 4h, for example, 3.5h to 4h; the temperature for the second step of sintering is 500°C to 600°C, for example, 520°C to 580°C, and 540°C to 560°C, and the holding time is 8h to 12h, for example, 9h to 11h, and 10h to 11h.

In some embodiments, if the precursor material that is obtained above and contains the sodium source, potassium source, iron source, phosphorus source, M source and the first carbon source is placed in a tube furnace for sintering, nitrogen may be introduced and used as a protective gas during the sintering process. During the sintering process, the first carbon source is thermally decomposed and used as a reducing agent. The sintering conditions are the same as described above and will not be repeated here.

In some embodiments, if it is necessary to obtain a positive electrode active material having a carbon coating, the positive electrode active material obtained in the above steps is mixed with a second carbon source and then sintered. Specifically, the positive electrode active material and the second carbon source may be directly mixed and then sintered, or the positive electrode active material and the second carbon source may be dissolved in a solvent and mixed into a slurry, and then the slurry is dried and sintered. The mixture including the positive electrode active material and the second carbon source is placed in a tube furnace, nitrogen is introduced as a protective gas, and the temperature is raised to 500°C to 600°C, for example, 520°C to 580°C and 540°C to 560°C, and is held for 3h to 5h, for example, 4h, followed by sintering. Asnon-carbon elements in the second carbon source are de intercalated, a carbon-containing coating is formed on the surface of the positive electrode active material.

In some embodiments, if a composite material having the interior mixed with carbon and the surface coated with carbon is required, the precursor material including the sodium source, potassium source, iron source, phosphorus source, M source and the first carbon source is first sintered in a nitrogen atmosphere to obtain a positive electrode active material, and then the obtained positive electrode active material is mixed with the second carbon source and sintered in the nitrogen atmosphere.

It should be noted that the second carbon source includes at least one of sucrose, tannic acid, polyethylene glycol, polyacrylonitrile, cellulose, polyvinylpyrrolidone, glucose, ascorbic acid, conductive carbon black, carbon nanotubes, graphene, and citric acid. In the above preparation process, a mixing ratio of the sodium source, the potassium source, the iron source, the phosphorus source, the M source, the first carbon source and the second carbon source is based on the composition of the above-mentioned positive electrode active material compound: $Na_{4-x}K_yFe_{3-p}M_q$ $(PO_4)_2P_2O_7$, which will not be repeated here.

A third aspect of the present application provides a positive electrode plate including the positive electrode active material according to the first aspect or a positive electrode active material prepared by the method according to the second aspect. Therefore, the positive electrode plate has excellent ionic conductivity and electronic conductivity, thereby improving the energy density and rate performance of the battery.

In a sodium-ion battery, the positive electrode plate generally includes a positive electrode current collector and a positive electrode active material layer arranged on the positive electrode current collector, and the positive electrode active material layer includes a positive electrode active material.

The positive electrode current collector may be a conventional metal foil or a composite current collector (a composite current collector may be formed by applying a metal material onto a high molecular substrate). As an example, the positive electrode current collector may include one or more of copper foil, aluminum foil, nickel foil, stainless steel foil, stainless steel mesh, and carbon-coated aluminum foil.

In addition to the above-mentioned positive electrode active material, the positive electrode active material layer may further optionally include a conductive agent and a binder. The conductive agent is used to improve the conductivity of the positive electrode active material layer, and the binder is used to firmly binding the positive electrode active material to the positive electrode current collector. There is no particular limitation on the type of the conductive agent and binder, which can be selected according to actual requirements.

As an example, the conductive agent may include one or more of superconducting carbon, acetylene black, carbon black, Kotan black, carbon dots, carbon nanotubes, graphene, and carbon nanofibers; the binder may be one or more of styrene-butadiene rubber (SBR), polyacrylic acid (PAA), carboxymethyl cellulose (CMC), polyvinylidene fluoride (PVDF), polytetrafluoroethylene (PTFE), ethylene-vinyl acetate copolymer (EVA), and polyvinyl alcohol (PVA).

As an example, the binder may include one or more of styrene-butadiene rubber (SBR), styrene-butadiene copolymers (SBCs), polyvinylidene fluoride (PVDF), polytetrafluoroethylene (PTFE), and carboxymethyl cellulose (CMC).

These materials can be obtained by commercial approaches.

A fourth aspect of the present application provides a battery, including the above-mentioned positive electrode plate. Therefore, the battery has excellent energy density and rate performance.

The battery refers to a battery that can be used continually by activating an active material in a charging manner, after the battery is discharged.

It can be understood that the battery proposed in the present application may be a sodium-ion battery.

Generally, the battery includes the positive electrode plate, the negative electrode plate, a separator and the electrolyte solution. In the charge-discharge process of the battery, active ions are intercalated and de-intercalated back and forth between the positive electrode plate and the negative electrode plate. The separator is arranged between the positive electrode plate and the negative electrode plate and plays a role in isolation. The electrolyte serves to conduct ions between the positive electrode plate and the negative electrode plate.

[Negative electrode plate]

In the sodium-ion battery, the negative electrode plate typically includes a negative electrode current collector and a negative electrode active material layer arranged on the negative electrode current collector, and the negative electrode active material layer includes a negative electrode active material.

The negative electrode plate may include a negative electrode current collector only, i.e., it may not include a negative electrode active material. For the negative electrode plate, a metal phase may further include a metal phase pre-deposited on the negative electrode current collector. The negative electrode current collector may be made of a conventional metal foil, a carbon-coated metal foil, or porous metal plate materials. As an example, the negative electrode current collector may be a copper foil or aluminum foil.

The specific type of the negative electrode active material is not limited, and active materials which are known in the art and can be used for the negative electrode of the sodium-ion battery can be adopted, and those skilled in the art can select the active materials according to actual requirements. As an example, the negative electrode active material may include, but is not limited to, one or more of a sodium metal, a carbon material, an alloy material, a transition metal oxide/sulfide, a phosphorus-based material, and a titanate material. Specifically, the carbon material may include one or more of hard carbon, soft carbon, amorphous carbon, and nanostructured carbon materials; the alloy material may include an alloy material formed by one or more of Si, Ge, Sn, Pb, and Sb; the general formula of the transition metal oxide and sulfide is $M_xN_y$, where M includes one or more of Fe, Co, Ni, Mn, Sn, Mo, Sb, and V, and N includes O or S; the phosphorus-based material may include one or more of red phosphorus, white phosphorus, and black phosphorus; the titanate material may include one or more of $Na_2Ti_3O_7$, $Na_2Ti_6O_{13}$, $Na_4Ti_5O_{12}$, $Li_4Ti_5O_{12}$, and $NaTi_2(PO_4)_3$. These materials can be obtained by commercial approaches.

The negative electrode active material layer may further optionally include a binder and a conductive agent. The conductive agent is used to improve the conductivity of the negative electrode active material layer, and the binder is used to firmly bind the negative electrode active material and the binder to the negative electrode current collector. There is no particular limitation on the type of the conductive agent and binder, which can be selected according to actual requirements.

As an example, the conductive agent may include one or more of superconducting carbon, acetylene black, carbon black, Ketjen black, carbon dots, carbon nanotubes, graphene and carbon nanofibers.

As an example, the binder may include one or more of styrene-butadiene rubber (SBR), styrene-butadiene copolymers (SBCs), water-based acrylic resin, and carboxymethyl cellulose (CMC).

The negative electrode active material layer may further optionally include a thickening agent, such as carboxymethyl cellulose (CMC). However, the present application is not limited to this, and other materials that can be used as the thickening agent for the negative electrode plate of the sodium-ion battery can also be used in the present application.

[Separator]

In the present application, there is no special limitation on the separator, any well-known separator with a porous structure and electrochemical stability and mechanical stability can be selected according to actual requirements, for example, the separator may be a single-layer or multi-layer film containing one or more of glass fibers, non-woven fabrics, polyethylene, polypropylene and polyvinylidene fluoride.

[Electrolyte]

The electrolytic plays a role in conducting ions between the positive electrode plate and the negative electrode plate. The electrolyte may contain an electrolyte salt and a solvent.

As an example, the sodium salt electrolyte includes at least one of sodium hexafluorophosphate, sodium difluorooxalate borate, sodium tetrafluoroborate, sodium bis(oxalate)borate, sodium perchlorate, sodium hexafluoroarsenate, sodium bis(fluorosulfonyl)imide, sodium trifluoromethanesulfonate, and sodium bis(trifluoromethanesulfonyl) imide.

As an example, the solvent may include one or more of ethylene carbonate (EC), propylene carbonate (PC), methyl ethyl carbonate (EMC), diethyl carbonate (DEC), dimethyl carbonate (DMC), dipropylene carbonate (DPC), methyl propylene carbonate (MPC), ethyl propyl carbonate (EPC), butyl carbonate (BC), fluorinated ethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), dimethyl sulfone(MSM), ethylene glycol dimethyl ether (DME), diethylene glycol dimethyl ether, triethylene glycol dimethyl ether, tetraethylene glycol dimethyl ether, polyethylene glycol dimethyl ether, ethyl ether, ethylene glycol diethyl ether, ethylene glycol dibutyl ether, diethylene glycol diethyl ether, diethylene glycol dibutyl ether, tetrahydrofuran, methyl tetrahydrofuran, 1,3-dioxolane, 1,3-dioxane, 1,4-dioxane,tetrahydrofuran, ethyl methanesulfonate (EMS), and diethyl sulfone (ESE).

In some embodiments, the electrolyte may further include additives. For example, the additives may include a negative electrode film-forming additive, or may include a positive electrode film-forming additive, or may further include an additive that can improve some performance of the battery, such as an additive that improves overcharge performance of the battery, an additive that improves high temperature performance of the battery, and an additive that improves low temperature performance of the battery.

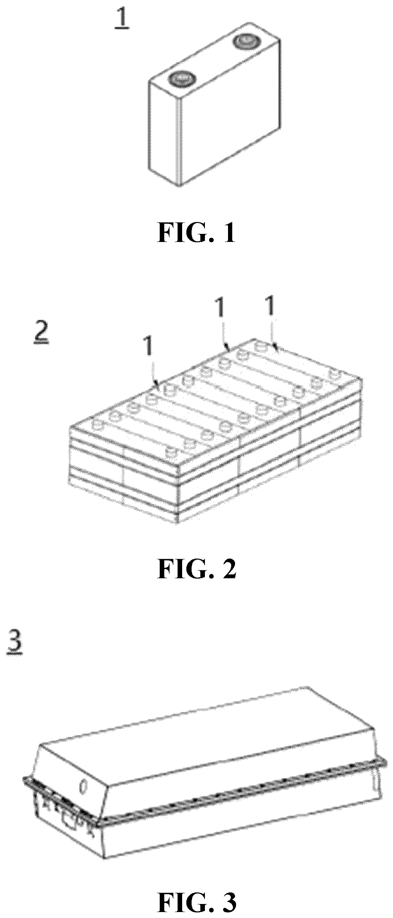

In the embodiments of the present application, there is no special limitation on the shape of the sodium-ion battery, and the sodium-ion battery may be cylindrical, square or in any other shape. FIG. 1 shows a secondary battery 1 having a square structure as an example.

In some embodiments, the secondary battery may include an outer package. The outer package may be used for encapsulating the positive electrode plate, the negative electrode plate, and the electrolyte.

In some embodiments, the outer package may include a case and a cover plate. The case may include a bottom plate and a side plate connected to the bottom plate, which enclose to form an accommodating cavity. The case has an opening in communication with the accommodating cavity, and the cover plate can cover the opening to close the accommodating cavity.

The positive electrode plate, the negative electrode plate, and the separator film can be made into an electrode assembly by a winding process or a lamination process. The electrode assembly is packaged in the accommodating cavity. The electrolyte may be an electrolyte solution, and the electrode assembly is infiltrated with the electrolyte solution. One or more electrode assemblies are contained in the sodium-ion battery, and the number can be selected according to requirements.

In some embodiments, the outer package of the sodium-ion battery may be a hard case, such as a hard plastic case, an aluminum case and a steel case.

The outer package of the sodium-ion battery may also be a soft pack, such as a pouch. The material of the pouch may be a plastic, which may, for example, include one or more of polypropylene (PP), polybutylene terephthalate (PBT) and polybutylene succinate (PBS).

In some embodiments, the sodium-ion battery may be assembled into a battery module, a plurality of lithium-ion batteries may be contained in the battery module, and the specific number can be selected according to the application and the capacity of the battery module.

FIG. 2 shows a battery module 2 as an example. Referring to FIG. 2, in the battery module 2, multiple secondary batteries 1 may be sequentially arranged along a length direction of the battery module 2. Of course, they may be arranged in any other way. The multiple secondary batteries 1 can be further fixed by fasteners.

The battery module 2 may further include a shell with an accommodating space. The multiple secondary batteries 1 are accommodated in the accommodating space. In some embodiments, the battery modules may further be assembled into a battery pack, and the number of battery modules contained in the battery pack may be adjusted according to the application and capacity of the battery pack.

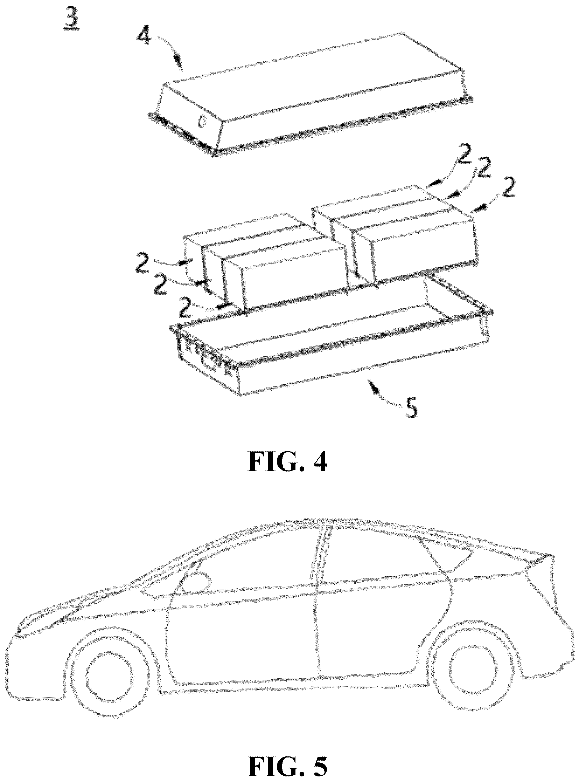

FIG. 3 and FIG. 4 show a battery pack 3 as an example. Referring to FIG. 3 and FIG. 4, the battery pack 3 may include a battery box and multiple battery modules 2 arranged in the battery box. The battery box includes an upper box 4 and a lower box 5. The upper box 4 can cover the lower box 5 to form an enclosed space for accommodating the battery module 2. The plurality of battery modules 2 can be arranged in the battery box in any mode.

[Electrical apparatus]

In addition, the present application further provides an electrical apparatus, including at least one of the sodium-ion battery, the battery module, or the battery pack. The sodium-ion battery, the battery module, or the battery pack may be used as a power source for the electrical apparatus, and may also be used as an energy storage unit for the electrical apparatus. The electrical apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

For the electrical apparatus, the sodium-ion battery, the battery module, or the battery pack may be selected according to its use requirements.

FIG. 5 is an example of an electrical apparatus. The electrical apparatus includes an all-electric vehicle, a hybrid electric vehicle, or a plug-in hybrid electric vehicle. In order to satisfy the requirements of the electrical apparatus for high power and high energy density of the sodium-ion battery, the battery pack or battery module may be employed.

As another example, the electrical apparatus may include a mobile phone, a tablet personal computer, and a laptop. The electrical apparatus is generally required to be thin and light, and may use the sodium-ion battery as a power source.

In order to make the technical problems addressed by, the technical solutions, and the beneficial effects of the embodiments of the present application clearer, the following will further describe them in detail in conjunction with the embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

Example 1

1. Preparation of positive electrode active material

(1) Sodium pyrophosphate, potassium pyrophosphate, ferrous oxalate, ammonium dihydrogen phosphate, nitrate M (nitrate of M) and glucose were mixed based on a composition ratio of $Na_{4-x}K_yFe_{3-p}M_q(PO_4)_2P_2O_7$ specified in Table 1, added into deionized water, and ground by a sand mill for 10 h to obtain a mixed slurry, and then the mixed slurry was dried by a spray drying device to obtain dry precursor powder.

(2) The dried precursor was placed in a tube furnace, nitrogen was introduced as a protective gas, the temperature was increased to 300°C, and held for 4 h for the first step of sintering. The temperature was then increased to 550°C and held for 12 h for the second step of sintering to obtain a positive electrode active material.

2. Preparation of positive electrode plate

A polyvinylidene fluoride binder was fully dissolved in N-methyl pyrrolidone, and a carbon black conductive agent and the above-mentioned positive electrode active material were added to prepare a uniformly-dispersed positive electrode slurry (a mass ratio of the polyvinylidene fluoride binder to the carbon black conductive agent to the positive electrode active material was 10:10:80); an upper surface and a lower surface of an aluminum foil were uniformly coated with the positive electrode slurry, and then the aluminum foil was transferred to a vacuum drying oven for complete drying; and the obtained electrode plate was rolled and then punched to obtain a positive electrode plate.

3. Preparation of negative electrode plate

A carbon nanotube material and a binder sodium carboxymethyl cellulose were added to water based on the mass ratio of 4:1.6 and stirred to obtain a uniform negative electrode slurry; the upper surface and the lower surface of a copper foil were uniformly coated with the negative electrode slurry, and then the copper foil was transferred to the vacuum drying oven for complete drying, followed by punching, to obtain a negative electrode plate.

4. Preparation of electrolyte

In a glove box under an argon atmosphere ($H_2O$ <0.1 ppm, and $O_2$<0.1 ppm), a sodium salt sodium hexa-

fluorophosphate $NaPF_6$ was dissolved in an organic solvent ethylene glycol dimethyl ether DME , and then stirred uniformly to obtain an electrolyte with a sodium salt concentration of 1 mol/L.

5. Separator

A polypropylene film was used as a separator.

6. Preparation of button battery

The positive electrode plate prepared above was pressed as a circular electrode plate, a small circular sodium plate was used as a counter electrode, a Celgard 2400 separator was used, and an electrolyte was injected, followed by assembling, to obtain a button battery.

7. Preparation of sodium-ion battery

The positive electrode plate, the separator and the negative electrode plate were stacked in sequence, the separator was located between the positive electrode plate and the negative electrode plate to play an isolation role, and the positive electrode plate, the separator and the negative electrode plate were wound to obtain an electrode assembly; and the electrode assembly was placed in an outer package, the prepared electrolyte solution was injected into a dried sodium-ion battery, and the dried sodium-ion battery was subjected to vacuum packaging, standing, formation and shaping processes to obtain a sodium-ion battery.

Preparation methods of sodium-ion batteries and button batteries in Examples 2 to 41 and 44 to 49 and Comparative Examples 1-3 were the same as that in Example 1, except that ratios of elements in the obtained positive electrode active materials were different, as shown in Table 1-6.

Example 42

Example 42 differs from Example 1 in that the preparation of the positive electrode active material in Example 1 further includes mixing the obtained positive electrode active material with glucose, placing the mixture in a tube furnace, introducing nitrogen as a protective gas, rising the temperature to 550°C, and holding the temperature for 4 h, followed by sintering, thereby forming a carbon coating on the surface of the positive electrode active material. Other differences are shown in Table 5.

Example 43

Example 43 differs from Example 1 in that glucose was not added in the process of preparing ingredients of the positive electrode active material, and sintering was carried out in a mixed atmosphere including hydrogen and argon (a volume ratio of hydrogen to argon is 5:95). Other differences are shown in Table 5.

Table 1

| Composition of positive electrode material $Na_{4-x}K_yFe_{3-p}M_q(PO_4)_2P_2O_7$ | Example 1 | Example 2 | Example 3 | Example 4 | Example 5 | Example 6 | Example 7 | Example 8 | Example 9 | Example 10 |
|---|---|---|---|---|---|---|---|---|---|---|
| x-value | 0.02 | 0.06 | 0.1 | 0.15 | 0.2 | 0.3 | 0.4 | 0.15 | 0.4 | 0.3 |
| y-value | 0.01 | 0.02 | 0.1 | 0.1 | 0.1 | 0.1 | 0.1 | 0.15 | 0.3 | 0.25 |
| 4-x+y | 3.99 | 3.96 | 4 | 3.95 | 3.9 | 3.8 | 3.7 | 4 | 3.9 | 3.95 |
| p-value | 0.15 | 0.15 | 0.15 | 0.15 | 0.15 | 0.15 | 0.15 | 0.15 | 0.15 | 0.15 |
| q-value | 0.05 | 0.05 | 0.05 | 0.05 | 0.05 | 0.05 | 0.05 | 0.05 | 0.05 | 0.05 |
| y/q | 0.2 | 0.4 | 2.0 | 2.0 | 2.0 | 2.0 | 2.0 | 3.0 | 6.0 | 5.0 |
| 3-p+q | 2.9 | 2.9 | 2.9 | 2.9 | 2.9 | 2.9 | 2.9 | 2.9 | 2.9 | 2.9 |
| Composition of M | Mg | Mg | Mg | Mg | Mg | Mg | Mg | Mg | Mg | Mg |
| Carbon position | Interior | Interior | Interior | Interior | Interior | Interior | Interior | Interior | Interior | Interior |
| Carbon content wt% | 2 | 2 | 2 | 2 | 2 | 2 | 2 | 2 | 2 | 2 |

Table 2

| Composition of positive electrode material $Na_{4-x}K_yFe_{3-p}M_q(PO_4)_2P_2O_7$ | Example 11 | Example 12 | Example 13 | Example 14 | Example 15 | Example 16 | Example 17 | Example 18 | Example 19 | Example 20 |
|---|---|---|---|---|---|---|---|---|---|---|
| x-value | 0.4 | 0.15 | 0.4 | 0.4 | 0.4 | 0.4 | 0.15 | 0.15 | 0.05 | 0.05 |
| y-value | 0.4 | 0.05 | 0.4 | 0.4 | 0.4 | 0.4 | 0.05 | 0.004 | 0.05 | 0.05 |
| 4-x+y | 4 | 3.9 | 4 | 4 | 4 | 4 | 3.9 | 3.854 | 4 | 4 |
| p-value | 0.15 | 0.15 | 0.15 | 0.15 | 0.15 | 0.15 | 0.3 | 0.25 | 0.05 | 0.1 |
| q-value | 0.05 | 0.05 | 0.005 | 0.006 | 0.01 | 0.02 | 0.25 | 0.2 | 0.03 | 0.05 |
| y/q | 8.0 | 1.0 | 80.0 | 66.7 | 40.0 | 20.0 | 0.2 | 0.02 | 1.7 | 1.0 |
| 3-p+q | 2.9 | 2.9 | 2.855 | 2.856 | 2.86 | 2.87 | 2.95 | 2.95 | 2.98 | 2.95 |
| Composition of M | Mg | Mg | Mg | Mg | Mg | Mg | Mg | Mg | Ni | Co |
| Carbon position | Interior | Interior | Interior | Interior | Interior | Interior | Interior | Interior | Interior | Interior |
| Carbon content wt% | 2 | 2 | 2 | 2 | 2 | 2 | 2 | 2 | 2 | 2 |

Table 3

| Composition of positive electrode material $Na_{4-x}K_yFe_{3-p}M_q(PO_4)_2P_2O_7$ | Example 21 | Example 22 | Example 23 | Example 24 | Example 25 | Example 26 | Example 27 | Example 28 | Example 29 | Example 30 |
|---|---|---|---|---|---|---|---|---|---|---|
| x-value | 0.05 | 0.15 | 0.15 | 0.15 | 0.15 | 0.15 | 0.15 | 0.15 | 0.15 | 0.15 |
| y-value | 0.05 | 0.1 | 0.1 | 0.1 | 0.1 | 0.1 | 0.1 | 0.1 | 0.1 | 0.1 |
| 4-x+y | 4 | 3.95 | 3.95 | 3.95 | 3.95 | 3.95 | 3.95 | 3.95 | 3.95 | 3.95 |
| p-value | 0.2 | 0.02 | 0.05 | 0.1 | 0.15 | 0.15 | 0.2 | 0.3 | 0.3 | 0.3 |
| q-value | 0.1 | 0.02 | 0.02 | 0.05 | 0.1 | 0.15 | 0.15 | 0.15 | 0.2 | 0.3 |
| y/q | 0.5 | 5.0 | 5.0 | 2.0 | 1.0 | 0.67 | 0.67 | 0.67 | 0.50 | 0.33 |
| 3-p+q | 2.9 | 3 | 2.97 | 2.95 | 2.95 | 3 | 2.95 | 2.85 | 2.9 | 3 |
| Composition of M | Ca | Mg | Mg | Mg | Mg | Mg | Mg | Mg | Mg | Mg |
| Carbon position | Interior | Interior | Interior | Interior | Interior | Interior | Interior | Interior | Interior | Interior |
| Carbon content wt% | 2 | 2 | 2 | 2 | 2 | 2 | 2 | 2 | 2 | 2 |

Table 4

| Composition of positive electrode material $Na_{4-x}K_yFe_{3-p}M_q(PO_4)_2P_2O_7$ | Example 31 | Example 32 | Example 33 | Example 34 | Example 35 | Example 36 | Example 37 | Example 38 | Example 39 | Example 40 |
|---|---|---|---|---|---|---|---|---|---|---|
| x-value | 0.15 | 0.15 | 0.15 | 0.15 | 0.15 | 0.15 | 0.15 | 0.15 | 0.15 | 0.15 |
| y-value | 0.1 | 0.1 | 0.1 | 0.1 | 0.1 | 0.1 | 0.1 | 0.1 | 0.1 | 0.1 |
| 4-x+y | 3.95 | 3.95 | 3.95 | 3.95 | 3.95 | 3.95 | 3.95 | 3.95 | 3.95 | 3.95 |
| p-value | 0.15 | 0.15 | 0.15 | 0.15 | 0.15 | 0.15 | 0.15 | 0.05 | 0.1 | 0.15 |
| q-value | 0.05 | 0.05 | 0.05 | 0.05 | 0.05 | 0.05 | 0.05 | 0.05 | 0.01 | 0.1 |
| y/q | 2.0 | 2.0 | 2.0 | 2.0 | 2.0 | 2.0 | 2.0 | 2.0 | 10.0 | 1.0 |
| 3-p+q | 2.9 | 2.9 | 2.9 | 2.9 | 2.9 | 2.9 | 2.9 | 3 | 2.91 | 2.95 |
| Composition of M | Mg | Mg | Mg | Mg | Mg | Mg | Mg | Mn | Al | Mn+Mg (molar ratio of Mn to Mg is 1:1) |
| Carbon position | Interior | Interior | Interior | Interior | Interior | Interior | Interior | Interior | Interior | Interior |
| Carbon content wt% | 0.5 | 1 | 3 | 3.6 | 4 | 5 | 6 | 2 | 2 | 2 |

Table 5

| Composition of positive electrode material $Na_{4-x}K_yFe_{3-p}M_q(PO_4)_2P_2O_7$ | Example 41 | Example 42 | Example 43 | Example 44 | Example 45 | Example 46 | Example 47 | Example 48 | Example 49 |
|---|---|---|---|---|---|---|---|---|---|
| x-value | 0.15 | 0.15 | 0.15 | 0.1 | 0.05 | 0.1 | 0.1 | 0.05 | 0.1 |
| y-value | 0.1 | 0.1 | 0.1 | 0.1 | 0.05 | 0.1 | 0.1 | 0.05 | 0.1 |
| 4-x+y | 3.95 | 3.95 | 3.95 | 4 | 4 | 4 | 4 | 4 | 4 |
| p-value | 0.15 | 0.15 | 0.15 | 0.12 | 0.15 | 0.175 | 0.12 | 0.15 | 0.13 |
| q-value | 0.06 | 0.05 | 0.05 | 0.1 | 0.1 | 0.05 | 0.1 | 0.1 | 0.05 |
| y/q | 1.7 | 2.0 | 2.0 | 1.0 | 0.5 | 2.0 | 1.0 | 0.5 | 2.0 |
| 3-p+q | 2.91 | 2.9 | 2.9 | 2.98 | 2.95 | 2.875 | 2.98 | 2.95 | 2.92 |
| Composition of M | Co+Al (molar ratio of Co to Al is 2:1) | Mg | Mg | Cu | Sr | Y | Cu+Mg (molar ratio of Cu to Mg is 7:3) | Sr+Mg (molar ratio of Sr to Mg is 1:1) | Y+Mg (molar ratio of Y to Mg is 2:3) |
| Carbon position | Interior | Interior + Surface coating | / | Interior | Interior | Interior | Interior | Interior | Interior |
| Carbon content wt% | 2 | 2 | 0 | 2 | 2 | 2 | 2 | 2 | 2 |

Table 6

| Composition of positive electrode material $Na_{4-x}K_yFe_{3-p}M_q(PO_4)_2P_2O_7$ | Comparative Example 1 | Comparative Example 2 | Comparative Example 3 |
|---|---|---|---|
| x-value | 0 | 0.5 | 0.15 |
| y-value | 0 | 0.15 | 0.55 |
| 4-x+y | 4 | 3.65 | 4.4 |
| p-value | 0 | 0.4 | 0.15 |
| q-value | 0 | 0.05 | 0.5 |
| y/q | / | 3.0 | 1.1 |
| 3-p+q | 3 | 2.65 | 3.35 |
| Composition of M | / | Mg | Mg |
| Carbon position | Interior | Interior | Interior |
| Carbon content wt% | 2 | 2 | 2 |

The performance of the button batteries, as well as the rate performance of the sodium-ion batteries, obtained in Examples 1 to 49 and Comparative Examples 1 to 3, are characterized. The characterization results are shown in Table 7.

Button battery performance test: At 25°C and under normal pressure, a button battery was charged at a constant current of 0.1C to a voltage of 3.75V, then charged at a constant voltage of 3.75V until the current dropped to 0.05C, the charge specific capacity at this point was recorded as an initial sodium deintercalation capacity; after that, the battery was discharged at a constant current of 0.1C to a voltage of 1.5V, the discharge specific capacity at this point was recorded as an initial sodium intercalation capacity. The gram capacity of the positive electrode active material was the initial sodium intercalation capacity.

Sodium-ion battery rate performance test: At 25°C, the prepared sodium-ion battery was placed in a 25°C thermostat and subjected to standing for 30 min to obtain a constant-temperature battery. The constant-temperature battery was charged to 3.7V at a constant current of 0.33C at 25°C, charged to 0.05C at a constant voltage of 3.7V, followed by standing for 5 min, and then the battery was discharged to 1.5V at a constant current of 0.33C and allowed to stand for 5 min to obtain a discharge capacity $C_1$ at 0.33C, then was charged to 3.7V at a constant current of 0.33C, charged to 0.05C at a constant voltage of 3.7V, allowed to stand for 5 min, and then discharged to 1.5V at a constant current of 3C and allowed to stand for 5 min to obtain a discharge capacity $C_2$ at 3C. The capacity retention rate at a rate of 3C was $R=C_2/C_1\times100\%$.

Table 7

| | Gram capacity / (mAh/g) | Capacity retention rate at rate of 3C / (%) |
|---|---|---|
| Example 1 | 108.2 | 92.70 |
| Example 2 | 108.9 | 93.00 |
| Example 3 | 110.8 | 94.30 |
| Example 4 | 112.2 | 94.70 |
| Example 5 | 110.5 | 94.50 |
| Example 6 | 106.3 | 94.40 |
| Example 7 | 103.7 | 94.10 |
| Example 8 | 109.5 | 95.20 |
| Example 9 | 104.3 | 94.80 |
| Example 10 | 107.6 | 95.00 |
| Example 11 | 105.2 | 95.20 |
| Example 12 | 108.5 | 93.70 |
| Example 13 | 102.1 | 92.10 |
| Example 14 | 102.7 | 92.60 |

(continued)

|  | Gram capacity / (mAh/g) | Capacity retention rate at rate of 3C / (%) |
|---|---|---|
| Example 15 | 103.5 | 93.20 |
| Example 16 | 104.1 | 93.90 |
| Example 17 | 104.8 | 96.60 |
| Example 18 | 100.6 | 92.20 |
| Example 19 | 105.3 | 95.20 |
| Example 20 | 103.1 | 95.50 |
| Example 21 | 106.5 | 94.30 |
| Example 22 | 103.1 | 92.40 |
| Example 23 | 104.7 | 92.50 |
| Example 24 | 108.5 | 93.60 |
| Example 25 | 110.9 | 95.10 |
| Example 26 | 109.1 | 95.70 |
| Example 27 | 108.6 | 95.60 |
| Example 28 | 106.4 | 95.60 |
| Example 29 | 104.3 | 96.30 |
| Example 30 | 102.5 | 97.00 |
| Example 31 | 106.4 | 93.50 |
| Example 32 | 108.5 | 94.00 |
| Example 33 | 110.1 | 95.10 |
| Example 34 | 108.9 | 95.60 |
| Example 35 | 107.3 | 96.30 |
| Example 36 | 105.7 | 96.80 |
| Example 37 | 103.3 | 97.20 |
| Example 38 | 109.6 | 94.60 |
| Example 39 | 113.0 | 93.10 |
| Example 40 | 108.6 | 95.80 |
| Example 41 | 109.4 | 94.30 |
| Example 42 | 108.8 | 93.50 |
| Example 43 | 100.3 | 90.20 |
| Example 44 | 113.6 | 95.80 |
| Example 45 | 105.6 | 94.80 |
| Example 46 | 112.4 | 95.00 |
| Example 47 | 110.8 | 96.50 |
| Example 48 | 106.2 | 95.40 |
| Example 49 | 111.3 | 96.70 |
| Comparative Example 1 | 96.5 | 87.70 |
| Comparative Example 2 | 75.2 | 73.10 |
| Comparative Example 3 | 70.7 | 65.30 |

Conclusion: The positive electrode active materials in Examples 1 to 49 have higher gram capacity as compared to that in Comparative Examples 1 to 3; and the sodium-ion batteries in Examples 1 to 49 have good capacity retention rate at a rate of 3C as compared to that in Comparative Examples 1 to 3. This indicates that the positive electrode active materials according to the present application can improve the energy density and rate performance of the sodium-ion batteries. Moreover, the positive electrode materials in Examples 1 to 42 and Examples 44 to 49 all contain carbon, while the positive electrode material in Example 43 does not include carbon. As seem from the comparison, the positive electrode materials in Examples 1 to 42 and Examples 44 to 49 have higher gram capacity than the positive electrode material in Example 43, and the sodium-ion batteries in Examples 1 to 42 and Examples 44 to 49 have good capacity retention rate at a rate of 3C as compared to the sodium-ion battery in Example 43. This indicates that carbon mixed in the interior of the positive electrode active material can increase the phase purity of the material and reduce the content of impurity phases, thereby increasing the gram capacity of the positive electrode active material, improving the conductivity of the positive electrode active material, and increasing the capacity retention rate of the sodium-ion battery at a rate of 3C.

In the description of the specification, the explanation with reference to the terms such as "an embodiment", "some embodiments", "exemplary embodiments", "specific examples", or "some examples" means that specific features, structures, materials, or characteristics described in combination with the embodiment(s) or example(s) are included in at least one embodiment or example of the present application. In this specification, the schematic representation of the above terms does not necessarily refer to the same embodiment or example. Moreover, the specific features, structures, materials, or characteristics described may be combined in any one or more embodiments or examples in a suitable manner. In addition, those skilled in the art can integrate and combine different embodiments or examples as well as features of different embodiments or examples described in the present application without contradicting each other.

Although the embodiments of the present application has been shown and described above, it is to be understood that the embodiments are exemplary and cannot be construed as limiting the present application, and those skilled in the art may change, modify, replace and vary the embodiments within the scope of the present application.

**Claims**

1. A positive electrode active material, comprising

$$Na_{4-x}K_yFe_{3-p}M_q(PO_4)_2P_2O_7,$$

wherein M comprises at least one of Ni, Co, Mn, V, Ti, Mo, Nb, W, Cr, Zn, Zr, Ca, Mg, Cu, Sr, Y or Al, with $0 < x \leq 0.4$, $0 < y \leq 0.4$, $0 < p \leq 0.3$, and $0 < q \leq 0.3$.

2. The positive electrode active material according to claim 1, wherein values of x, y, p, and q satisfy at least one of the following conditions:

$$0.1 \leq x \leq 0.2;$$

$$0.05 \leq y \leq 0.15;$$

$$0.05 \leq p \leq 0.2;$$

$$0.05 \leq q \leq 0.15;$$

and

$$p \geq q.$$

3. The positive electrode active material according to claim 1 or 2, wherein $4-x+y \leq 4$.

4. The positive electrode active material according to any one of claims 1 to 3, wherein $3-p+q < 3$.

5. The positive electrode active material according to any one of claims 1 to 4, wherein $0.02 \leq y/q \leq 80$, preferably $0.1 \leq y/q \leq 40$, and more preferably $0.2 \leq y/q \leq 10$.

6. The positive electrode active material according to any one of claims 1 to 5, wherein M comprises at least one of Ni, Co, Mn, V, Ca, Mg, Cu, Sr, Y, or Al.

7. The positive electrode active material according to any one of claims 1 to 6, wherein the positive electrode active material further comprises carbon.

8. The positive electrode active material according to claim 7, wherein the carbon content accounts for 0.5%-6%, preferably 1%-3.6%, based on the total mass of the positive electrode active material.

9. The positive electrode active material according to any one of claims 1 to 8, wherein the positive electrode active material satisfies at least one of the following conditions:

   a volume average particle size Dv50 of the positive electrode active material is 0.9 $\mu$m to 8 $\mu$m, optionally 1.2 $\mu$m to 3.5 $\mu$m;
   a BET specific surface area of the positive electrode active material is 4 m$^2$/g to 13 m$^2$/g, optionally 5.5 m$^2$/g to 10 m$^2$/g.

10. A method for preparing the positive electrode active material according to any one of claims 1 to 9, comprising:

    mixing a sodium source, a potassium source, an iron source, a phosphorus source, and an M source to obtain a precursor material; and
    sintering the precursor material to obtain the positive electrode active material.

11. The method according to claim 10, wherein the sintering temperature is 200°C to 600°C, and the holding time is 11h to 16h.

12. The method according to claim 10 or 11, wherein the sodium source, potassium source, iron source, phosphorus source and M source are mixed with a first carbon source.

13. The method according to any one of claims 9 to 12, the method further comprising:
    mixing the positive electrode active material with a second carbon source and then sintering to form a carbon coating on the surface of the positive electrode active material.

14. The method according to claim 13, wherein the temperature for sintering a mixture of the positive electrode active material and the second carbon source is 500°C to 600°C, and the holding time is 3 h to 5 h.

15. A positive electrode plate, comprising the positive electrode active material according to any one of claims 1 to 9 or a positive electrode active material obtained by the method according to any one of claims 10 to 14.

16. A battery, comprising the positive electrode plate according to claim 15.

17. An electrical apparatus, comprising the battery according to claim 16.

FIG. 1

FIG. 2

FIG. 3

**FIG. 4**

**FIG. 5**

## INTERNATIONAL SEARCH REPORT

| International application No. |
| --- |
| **PCT/CN2023/105753** |

**A.    CLASSIFICATION OF SUBJECT MATTER**

H01M4/36(2006.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 钠, 正极, 阴极, 磷酸, 焦磷酸, 铁, 掺杂, 改性, batter+, cell?, sodium, cathode, positive, electrode, phosphate, pyrophosphate, ortho-pyrophosphate, iron, doping, modification

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 114361425 A (CENTRAL SOUTH UNIVERSITY) 15 April 2022 (2022-04-15) description, paragraphs 5-29 | 1-17 |
| Y | CN 115810737 A (SVOLT ENERGY TECHNOLOGY CO., LTD.) 17 March 2023 (2023-03-17) description, paragraphs 3-34 | 1-17 |
| Y | CN 114613998 A (BEIJING INSTITUTE OF TECHNOLOGY et al.) 10 June 2022 (2022-06-10) description, paragraphs 4-17 | 1-17 |
| Y | CN 113675390 A (FUDAN UNIVERSITY) 19 November 2021 (2021-11-19) description, paragraphs 5-16 | 1-17 |
| Y | CN 112768673 A (WUHAN UNIVERSITY) 07 May 2021 (2021-05-07) description, paragraphs 4-26 | 4-17 |
| Y | CN 115986080 A (SVOLT ENERGY TECHNOLOGY CO., LTD.) 18 April 2023 (2023-04-18) description, paragraphs 3-19 | 4-17 |

☑ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **07 December 2023** | **25 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/105753** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114156453 A (CHONGQING INNOVATION CENTER, BEIJING INSTITUTE OF TECHNOLOGY) 08 March 2022 (2022-03-08)<br>entire document | 1-17 |
| A | US 2016118683 A1 (TOYOTA JIDOSHA KABUSHIKI KAISHA) 28 April 2016 (2016-04-28)<br>entire document | 1-17 |

Form PCT/ISA/210 (second sheet) (July 2022)

INTERNATIONAL SEARCH REPORT
Information on patent family members

International application No.

**PCT/CN2023/105753**

| Patent document cited in search report | | | Publication date (day/month/year) | Patent family member(s) | | | Publication date (day/month/year) |
|---|---|---|---|---|---|---|---|
| CN | 114361425 | A | 15 April 2022 | None | | | |
| CN | 115810737 | A | 17 March 2023 | None | | | |
| CN | 114613998 | A | 10 June 2022 | None | | | |
| CN | 113675390 | A | 19 November 2021 | None | | | |
| CN | 112768673 | A | 07 May 2021 | None | | | |
| CN | 115986080 | A | 18 April 2023 | None | | | |
| CN | 114156453 | A | 08 March 2022 | None | | | |
| US | 2016118683 | A1 | 28 April 2016 | JP | 2016085887 | A | 19 May 2016 |

Form PCT/ISA/210 (patent family annex) (July 2022)